(19) **Europäisches Patentamt / European Patent Office / Office européen des brevets**

(11) **EP 4 597 665 A1**

(12) **EUROPEAN PATENT APPLICATION**
published in accordance with Art. 153(4) EPC

(43) Date of publication:
06.08.2025 Bulletin 2025/32

(21) Application number: 23872475.1

(22) Date of filing: 27.09.2023

(51) International Patent Classification (IPC):
$H01M\ 10/052^{(2010.01)}$    $H01M\ 4/136^{(2010.01)}$
$H01M\ 4/58^{(2010.01)}$      $H01M\ 4/66^{(2006.01)}$
$H01M\ 10/0568^{(2010.01)}$   $H01M\ 10/0569^{(2010.01)}$
$H01M\ 10/0585^{(2010.01)}$

(52) Cooperative Patent Classification (CPC):
H01M 4/136; H01M 4/58; H01M 4/66;
H01M 10/052; H01M 10/0568; H01M 10/0569;
H01M 10/0585; Y02E 60/10

(86) International application number:
PCT/JP2023/035285

(87) International publication number:
WO 2024/071253 (04.04.2024 Gazette 2024/14)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 28.09.2022 JP 2022154687

(71) Applicant: SEKISUI CHEMICAL CO., LTD.
**Osaka-shi
Osaka
530-8565 (JP)**

(72) Inventors:
• **SUZUKI, Shohei**
  **Tsukuba-shi, Ibaraki 300-4247 (JP)**
• **IINO, Junya**
  **Tsukuba-shi, Ibaraki 300-4247 (JP)**
• **YOSHIKAWA, Hikaru**
  **Tsukuba-shi, Ibaraki 300-4247 (JP)**

(74) Representative: **Ter Meer Steinmeister & Partner Patentanwälte mbB**
**Nymphenburger Straße 4**
**80335 München (DE)**

(54) **NON-AQUEOUS ELECTROLYTE SECONDARY BATTERY**

(57)     [Problem] To provide a non-aqueous electrolyte secondary battery in which the decrease in cycle characteristics is improved as compared with conventional non-aqueous electrolyte secondary batteries.

[Solution] A lithium ion secondary battery, which comprises a positive electrode comprising a positive electrode active material, a negative electrode, and a non-aqueous electrolyte solution, wherein the non-aqueous electrolyte solution comprises $LiPF_6$ and a lithium imide salt as an electrolyte, and comprises a carbonate-based solvent as a solvent, the lithium ion secondary battery comprises or does not comprise a surplus electrolyte solution, the ratio of the positive electrode capacity to the negative electrode capacity is adjusted to less than 1, the nominal voltage is adjusted to less than 3.6 V, and the total content of $LiPF_6$ and lithium imide salt comprised in the non-aqueous electrolyte solution per unit battery capacity and the ratio of the positive electrode capacity to the negative electrode capacity are adjusted to satisfy a specific relationship.

FIG. 1

EP 4 597 665 A1

## Description

[Technical field]

The present invention relates to a non-aqueous electrolyte secondary battery and a battery module or a battery system comprising the non-aqueous electrolyte secondary battery.

[Background art]

Non-aqueous electrolyte secondary batteries such as lithium ion secondary batteries are used as power sources for mobile phones, personal computers, automobiles, and the like. Furthermore, research has been conducted on the non-aqueous electrolyte secondary batteries used for these applications with the aim of ensuring safety and improving various characteristics such as cycle characteristics.

For example, Patent Document 1 discloses an electrolyte solution in which a halogenated carbonate ester such as 4-fluoro-1,3-dioxolan-2-one (FEC), and lithium bis(fluorosulfonyl)imide (LiFSI) and lithium hexafluoride as electrolyte salts are dissolved in a mixed solvent of ethylene carbonate and dimethyl carbonate to a total concentration of 1.1 mol/L. The same document also discloses that LiFSI and a halogenated carbonate ester are used in combination, and the LiFSI concentration is set to 0.001 mol/L to 0.5 mol/L in order to improve cycle characteristics in the low and high temperature regions.

Furthermore, Patent Document 2 discloses that, in order to improve cycle characteristics, an electrolyte solution comprising an electrolyte salt and a solvent has an electrolyte concentration of more than 1.1 mol/L, a specific compound is used as an electrolyte salt, and a cyclic carbonate is used as a solvent.

[Prior arts]

[Patent documents]

[Patent Document 1] JP 2011-150958 A
[Patent Document 2] International Publication No. 2014/126256 A1

[Summary of the invention]

[Problem to be solved by the invention]

While non-aqueous electrolyte secondary batteries had a product life of about 3 years when they were first developed, currently, product life often exceeds 15 years, and although rare, there are products with a product life of 20 years or more. It is believed that such an extension of the life of non-aqueous electrolyte secondary batteries will continue in the future, and in order to accommodate such further life extension, there is a problem of improving long-term life characteristics, which have not been considered in the past, in particular cycle characteristics after more than several thousand cycles.

Therefore, an object of the present invention is to provide a non-aqueous electrolyte secondary battery in which the cycle characteristics, particularly the cycle characteristics after several thousand cycles are improved, i.e., the decrease in cycle characteristics is suppressed as compared with conventional non-aqueous electrolyte secondary batteries. Another object of the present invention is to provide a battery module and a battery system comprising such non-aqueous electrolyte secondary battery in which the cycle characteristics are improved.

[Means for solving the problem]

As a result of intensive research, the present inventors have found that the above-mentioned problems can be solved by a lithium ion secondary battery, which comprises a positive electrode comprising a positive electrode active material, a negative electrode, and a non-aqueous electrolyte solution, wherein the non-aqueous electrolyte solution comprises $LiPF_6$ and a lithium imide salt as an electrolyte, and comprises a carbonate-based solvent as a solvent, the lithium ion secondary battery comprises or does not comprise a surplus electrolyte solution, the ratio of the positive electrode capacity to the negative electrode capacity is adjusted to less than 1, the nominal voltage is adjusted to less than 3.6 V, and the total content of $LiPF_6$ and lithium imide salt comprised in the non-aqueous electrolyte solution per unit battery capacity and the ratio of the positive electrode capacity to the negative electrode capacity are adjusted to satisfy a specific relationship. The present invention is based on such findings. That is, the summary of the present invention is as follows.

[1] A lithium ion secondary battery, which comprises a positive electrode comprising a positive electrode active material, a negative electrode, and a non-aqueous electrolyte solution, wherein

the non-aqueous electrolyte solution comprises $LiPF_6$ and a lithium imide salt as an electrolyte, and comprises a carbonate-based solvent as a solvent,
the lithium ion second battery comprises or does not comprise a surplus electrolyte solution,
the ratio of the positive electrode capacity to the negative electrode capacity is less than 1,
the nominal voltage is less than 3.6 V, and
the total content of $LiPF_6$ and lithium imide salt comprised in the non-aqueous electrolyte solution per unit battery capacity and the ratio of the positive electrode capacity to the negative electrode capacity satisfies the following formula:

Total content of $LiPF_6$ and lithium imide salt per unit battery capacity $\geqq 16.5 \times$ Ratio of the positive electrode capacity to the negative electrode capacity - 9.2

[2] The lithium ion secondary battery according to [1], which comprises a surplus electrolyte solution.
[3] The lithium ion secondary battery according to [1] or [2], wherein the ratio of the positive electrode capacity to the negative electrode capacity is 0.57 or more and less than 1.
[4] The lithium ion secondary battery according to any one of [1] to [3], wherein the ratio of the molecular number of the lithium imide salt to the total molecular number of the Li salt in the non-aqueous electrolyte solution is 5% or more and less than 50%.
[5] The lithium ion secondary battery according to any one of [1] to [4], wherein the lithium imide salt is represented by the following general formula:

$$LiN(SO_2R)_2$$

wherein R represents a fluorine atom or $C_xF_{(2x+1)}$, and x is an integer of 1 to 3.
[6] The lithium ion secondary battery according to any one of [1] to [5], wherein the lithium imide salt is lithium bis(fluorosulfonyl)imide.
[7] The lithium ion secondary battery according to any one of [1] to [6], wherein the content of ethylene carbonate in the solvent is 10 to 50% by volume.
[8] The lithium ion secondary battery according to any one of [1] to [7], wherein the battery capacity is 1 Ah or more.
[9] The lithium ion secondary battery according to any one of [1] to [8], wherein the positive electrode has a layer of aluminum foil and has an undercoat layer between the layer of aluminum foil and the positive electrode active material.
[10] The lithium ion secondary battery according to [9], wherein the undercoat layer comprises a conductive carbon material.
[11] The lithium ion secondary battery according to any one of [1] to [10], wherein the positive electrode active material comprises a compound represented by the following general formula:

$$LiFe_yM_{(1-y)}PO_4$$

wherein y is 0 or 1, and M is Co, Ni, Mn, Al, Ti or Zr.
[12] The lithium ion secondary battery according to any one of [1] to [11], wherein the positive electrode active material is lithium iron phosphate.
[13] A battery module or a battery system comprising one or more lithium ion secondary batteries according to any one of [1] to [12].

[Effect of the invention]

According to the present invention, it is possible to provide a non-aqueous electrolyte secondary battery in which cycle characteristics are improved compared with conventional non-aqueous electrolyte secondary batteries.

[Brief description of the drawings]

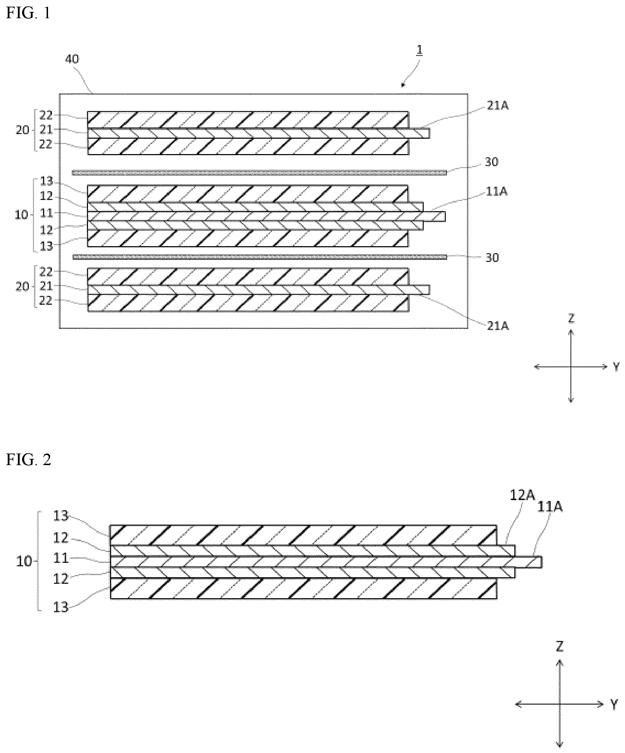

[FIG. 1] FIG. 1 is a schematic cross-sectional view showing one embodiment of the non-aqueous electrolyte secondary battery of the present invention. The non-aqueous electrolyte secondary battery 1 is a laminate in which one plate-shaped positive electrode 10, two plate-shaped negative electrodes 20, and two porous separators 30 are laminated in the order of negative electrode/porous separator/positive electrode/porous separator/negative electrode, which is housed in an exterior casing 40 and sealed in a state in which a non-aqueous electrolyte solution (not shown) is filled in the exterior casing 40. In FIG. 1, the positive electrode 10, the negative electrode 20, and the porous separator 30 are all rectangular in plan view. The short side direction, long side direction, and thickness direction of the positive electrode 10, the negative electrode 20, and the separator 30 composing the non-aqueous electrolyte secondary battery 1 are assumed to coincide with the short side direction X, the long side direction Y, and the thickness direction Z of the non-aqueous electrolyte secondary battery 1, respectively.

[FIG. 2] FIG. 2 is a schematic cross-sectional view showing one embodiment of the positive electrode of the non-aqueous electrolyte secondary battery of the present invention. The positive electrode 10 of the non-aqueous electrolyte secondary battery 1 is composed of a current collector 11, an undercoat layer 12 covering one surface of the current collector 11, and a positive electrode mixture layer 13 provided on the undercoat layer 12. Similarly, the other surface of the current collector 11 is also provided with an undercoat layer 12 covering one surface of the current collector 11, and a positive electrode mixture layer 13 provided on the undercoat layer 12. Although not shown, when the positive electrode 10 and the negative electrode 20 are paired, the positive electrode mixture layer 13 may be provided on at least one surface of the positive electrode current collector 11 on the opposing negative electrode 20 side.

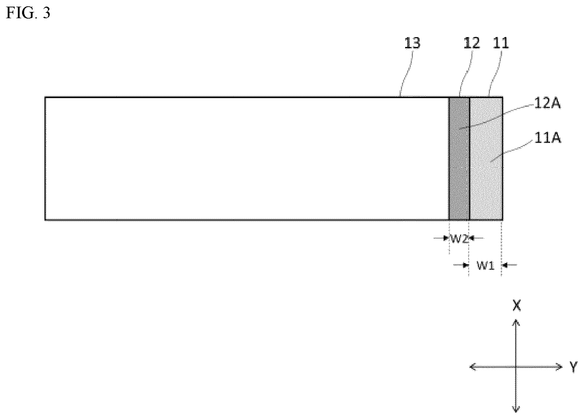

[FIG. 3] FIG. 3 is a schematic plan view showing one embodiment of a positive electrode of a non-aqueous electrolyte secondary battery of the present invention.

[Detailed description of the preferred embodiments]

[Non-aqueous electrolyte secondary battery]

According to one aspect of the present invention, there is provided a non-aqueous electrolyte secondary battery (lithium ion secondary battery) (hereinafter also referred to as "secondary battery of the present invention"), which comprises a positive electrode comprising a positive electrode active material, a negative electrode, and a non-aqueous electrolyte solution.

The shape of the secondary battery of the present invention is not particularly limited, and any shape conventionally known as a shape of a non-aqueous electrolyte secondary battery can be used, such as a cylindrical shape, a square shape, a laminated shape, a coin shape, a large shape, and the like. Furthermore, when the secondary battery of the present invention is used as a high-voltage power source (several tens of volts to several hundreds of volts) to be mounted on an electric vehicle, a hybrid electric vehicle, and the like, it can also be made into a battery module or a battery system composed by connecting individual batteries in series.

The secondary battery of the present invention has a nominal voltage of less than 3.6 V, preferably 3.0 to 3.6 V, more preferably 3.1 to 3.5 V, and even more preferably 3.2 to 3.4 V. It is known that the nominal voltage of a secondary battery is approximately equal to the average discharge voltage, and the higher the average discharge voltage, the higher the energy density of the battery. In the secondary battery of the present invention, the nominal voltage (i.e., the average discharge voltage) is a value measured by a charge/discharge device. In detail, the nominal voltage is a value measured during discharge of the secondary battery of the present invention, and can be calculated based on the following formula from the discharge capacity when the terminal voltage reaches 2 V when a fully charged lithium ion secondary battery is discharged at a current (0.2 C) that completes the discharge in 5 hours.

$$\text{Average discharge voltage } [V] = \text{Discharge capacity } [mWh] / \text{Discharge capacity } [mAh]$$

The battery capacity of the secondary battery of the present invention is not particularly limited as long as the effects of the present invention are achieved, and is, for example, 1 Ah or more, more specifically, 1 to 100 Ah, 1 to 50 Ah, and the like.

The term "a surplus electrolyte solution" in the present invention refers to the surplus electrolyte solution generated by filling the gaps between the electrodes and the separator with the electrolyte solution and then adding more electrolyte solution to the battery, and the amount of surplus electrolyte solution refers to its amount. The amount of surplus electrolyte solution can be measured as follows. That is, in the case of a laminated secondary battery, the surface with the largest area of the battery is placed on a flat desk, a flat plate with an area equal to or larger than the area of the battery is placed on the flat plate, and a weight of 10 kg or more is placed on the flat plate, and the battery is left to stand for 10 minutes or more. Then, one end of the exterior is cut off to make an opening, and the electrolyte solution that comes out is transferred to a resin container and the mass is measured. When the battery is housed in a can, the top of the can is cut off, the laminate of the electrodes and the separator is taken out, and the laminate is placed in a resin bag together with the electrolyte solution that has accumulated at the bottom of the can, and the amount of surplus electrolyte solution can be measured by carrying out the same process as for a laminated battery.

The secondary battery of the present invention comprises or does not comprise a surplus electrolyte solution. When the secondary battery of the present invention contains a surplus electrolyte solution, the amount of surplus electrolyte solution is not particularly limited as long as the effects of the present invention are achieved, but is preferably 1 g or more. If the amount of surplus electrolyte solution is too much, the energy density of the battery decreases, which is undesirable, and if the amount of surplus electrolyte solution is too little, the cycle characteristics decrease significantly, which is undesirable.

Each component of the secondary battery of the present invention will be described in detail below.

<Non-aqueous electrolyte solution>

In the present invention, the non-aqueous electrolyte solution is an electrolyte solution comprising an electrolyte and a solvent, and comprises $LiPF_6$ and a lithium imide salt as the electrolyte, and comprises a carbonate-based solvent as the solvent.

(Electrolytes)

The non-aqueous electrolyte solution comprises $LiPF_6$ (lithium hexafluorophosphate) and a lithium imide salt as electrolytes. These electrolytes react with the positive electrode and/or the negative electrode during battery operation to form a coating on the electrode surface. This coating has the effect of suppressing the decomposition of the non-aqueous electrolyte solution, thereby suppressing the performance of the non-aqueous electrolyte solution from being impaired, thereby providing an effect of maintaining stable capacity, i.e., good cycle characteristics. **In** addition, the formation of the above-mentioned coating suppresses the elution of components composing of the electrodes, such as the electrode active material, and as a result, the increase in internal resistance of the secondary battery is suppressed, the discharge voltage can be maintained at a high value, and the cycle characteristics of the secondary battery are improved.

**In** the present invention, the total content of $LiPF_6$ and lithium imide salt in the non-aqueous electrolyte solution is such that the total content of $LiPF_6$ and lithium imide salt per unit battery capacity of the secondary battery of the present invention and the ratio of the positive electrode capacity to the negative electrode capacity satisfy the following formula:

Total content of $LiPF_6$ and lithium imide salt per unit battery capacity $\geqq 16.5 \times$ Ratio of the positive electrode capacity to the negative electrode capacity - 9.2

**In** the present invention, in particular, as mentioned above, by adjusting the total content of $LiPF_6$ and lithium imide salt per unit battery capacity of the secondary battery and the ratio of the positive electrode capacity to the negative electrode capacity to the above-mentioned range, the cycle characteristics of the secondary battery can be improved, and in particular, the decrease of the cycle characteristics after charging and discharging the secondary battery for several thousand cycles at a large current, i.e., the decrease of the capacity retention rate, can be suppressed. The reason why the cycle characteristics of the secondary battery can be improved by adjusting as described above the total content of $LiPF_6$ and lithium imide salt per unit battery capacity of the secondary battery and the ratio of the positive electrode capacity to the negative electrode capacity to the above-mentioned range is not clear, but it can be inferred as follows. That is, generally, the larger the ratio of the positive electrode capacity to the negative electrode capacity, the more likely lithium metal is to precipitate. However, even when lithium metal precipitates, if the lithium imide salt is sufficiently comprised in the non-aqueous electrolyte solution, a good coating is formed, and as a result, it is considered that the degradation of the electrode is suppressed even after several thousand cycles of charging and discharging at a large current, and the cycle characteristics can be improved.

The content of $LiPF_6$ in the non-aqueous electrolyte solution is not particularly limited as long as the effects of the present invention are achieved, and the upper limit is preferably 2 mol/L, more preferably 1.5 mol/L, and even more preferably 1.2 mol/L, and the lower limit is preferably 0.1 mol/L, more preferably 0.2 mol/L, and even more preferably 0.3 mol/L. If the content of $LiPF_6$ in the non-aqueous electrolyte solution is too high, the viscosity of the non-aqueous electrolyte solution may increase and the ion conductivity may decrease, while if the content of $LiPF_6$ is too low, the corrosion of the positive electrode caused by the lithium imide salt may easily occur.

The content of the lithium imide salt in the non-aqueous electrolyte solution is not particularly limited as long as the effects of the present invention are achieved, and the upper limit is preferably 2 mol/L, more preferably 1.5 mol/L, and even more preferably 1.2 mol/L, and the lower limit is preferably 0.1 mol/L, more preferably 0.2 mol/L, and even more preferably 0.3 mol/L. If the content of the lithium imide salt in the non-aqueous electrolyte solution is too high, the positive electrode may be easily corroded, while if the content of the lithium imide salt is too low, the effects provided by the lithium imide salt may be difficult to obtain.

In one embodiment, the ratio of the molecular number of the lithium imide salt to the total molecular number of Li salts in the non-aqueous electrolyte solution is 5% or more and less than 50%, preferably 10 to 40%, more preferably 15 to 35%, and even more preferably 20 to 35%.

In one embodiment, the lithium imide salt comprised in the electrolyte solution is a compound represented by the following general formula:

$$LiN(SO_2R)_2$$

wherein R represents a fluorine atom or $C_xF_{(2x+1)}$, and x is an integer of 1 to 3.

Examples of the compound represented by the above-mentioned general formula include lithium bis(fluorosulfonyl)imide, lithium (fluorosulfonyl)(trifluoromethylsulfonyl)imide, lithium (fluorosulfonyl)(methylsulfonyl)imide, lithium (fluorosulfonyl)(pentafluoroethylsulfonyl)imide, and lithium (fluorosulfonyl)(ethylsulfonyl)imide. As the lithium imide salt, lithium bis(fluorosulfonyl)imide is preferably used. Among these compounds, as the lithium imide salt, lithium bis(fluorosulfonyl)imide is preferably used. Lithium bis(fluorosulfonyl)imide has a sufficiently small molecular weight of the anion, and therefore can improve the conductivity.

The lithium imide salts as mentioned above may be used alone or in combination of two or more. The lithium imide salts may be commercially available or may be synthesized by a conventional method.

The non-aqueous electrolyte solution may comprise other electrolytes in addition to the above-mentioned $LiPF_6$ and lithium imide salt, as long as the effects of the present invention are not impaired. As such other electrolytes, conventionally known electrolytes such as inorganic or organic cationic salts having trifluoromethanesulfonate ion ($CF_3SO_3^-$), perchlorate ion ($ClO_4^-$), tetrafluoroborate ion ($BF_4^-$), hexafluoroarsenate ion ($AsF_6^-$), tetracyanoborate ion ($[B(CN)_4]^-$), tetrachloroaluminum ion ($AlCl_4^-$), tricyanomethide ion ($C[(CN)_3]^-$), dicyanamide ion ($N[(CN)_2]^-$), bis(trifluoromethanesulfonyl)imide ion ($N[(SO_2CF_3)_2]^-$), tris(trifluoromethanesulfonyl)methide ion ($C[(CF_3SO_2)_3]^-$), hexafluoroantimonate ion ($SbF_6^-$), and dicyanotriazolate ion (DCTA) or the like as an anion can be used.

The above-mentioned other electrolytes may be used alone or in combination of two or more. In addition, the other electrolytes may be commercially available products or may be synthesized by a conventional method.

The content of the other electrolyte in the non-aqueous electrolyte solution is not particularly limited as long as the effects of the present invention are achieved, and the upper limit is preferably 0.5 mol/L, more preferably 0.3 mol/L, and even more preferably 0.1 mol/L. On the other hand, the lower limit is not particularly limited as long as the effects of the present invention are achieved, and can be appropriately adjusted.

(Solvent)

The non-aqueous electrolyte solution comprises a carbonate-based solvent as a solvent. Examples of carbonate solvent include saturated cyclic carbonates such as ethylene carbonate, propylene carbonate, 2,3-dimethylethylene carbonate (2,3-butanediyl carbonate), 1,2-butylene carbonate and erythritan carbonate; cyclic carbonates having unsaturated bonds (unsaturated cyclic carbonates) such as vinylene carbonate, methylvinylene carbonate (MVC; 4-methyl-1,3-dioxol-2-one), ethylvinylene carbonate (EVC; 4-ethyl-1,3-dioxol-2-one), 2-vinylethylene carbonate (4-vinyl-1,3-dioxolane-2-one) and phenylethylene carbonate (4-phenyl-1,3-dioxolane-2-one); and fluorine-containing cyclic carbonates such as fluoroethylene carbonate, 4,5-difluoroethylene carbonate and trifluoropropylene carbonate. Among these, from the viewpoint of cost, saturated cyclic carbonates are preferably used, and ethylene carbonate and propylene carbonate are particularly preferably used. The carbonate-based solvents may be used alone or in combination of two or more.

The content of the carbonate-based solvent in the non-aqueous electrolyte solution is not particularly limited as long as the effect of the present invention is achieved, and can be appropriately adjusted. For example, the molar ratio of carbonate to the total amount of lithium ions in the non-aqueous electrolyte solution (moles of carbonate/moles of lithium ions) can affect the performance of secondary batteries, so the content of the carbonate-based solvent in the non-aqueous electrolyte solution is adjusted so that this molar ratio is within a specific range.

Specifically, if the molar ratio is too large, the free carbonate present in excess in the non-aqueous electrolyte solution is oxidized and/or reduced and decomposed, resulting in a decrease in cycle characteristics. On the other hand, if the molar ratio is too small, the amount of carbonate is too small, making it difficult to obtain the effects provided by the carbonate (for example, the effect of forming a coating on the negative electrode and suppressing the decomposition of the electrolyte solution), and there is a risk of causing the electrolyte solution to dry up due to the consumption of the solvent (coating formation, decomposition, and the like) caused by repeated charging and discharging. From these viewpoints, the content of the carbonate-based solvent is adjusted so that the molar ratio of carbonate to the total amount of lithium ions in

EP 4 597 665 A1

the non-aqueous electrolyte solution is preferably in the range of 1 to 5, more preferably 1 to 4, even more preferably 1 to 3, and even more preferably 1.6 to 2.9. The content of carbonate in the solvent is preferably 10 to 50% by volume, and more preferably 20 to 50% by volume. By adjusting the content of the carbonate-based solvent in the non-aqueous electrolyte solution within the above-mentioned range, it is possible to further suppress decrease in the cycle characteristics of the non-aqueous electrolyte secondary battery while suppressing the above-mentioned problems.

The molar ratio of carbonate to the total amount of lithium ions in the non-aqueous electrolyte solution is calculated based on the specific gravity and the molar mass of the carbonate and the molar mass of the electrolyte. For example, when the carbonate is ethylene carbonate, the specific gravity is 1.321 and the molar mass is 88.06, and when the electrolyte is LiFSI, the molar mass is 187.07 to calculate the molar ratio.

The non-aqueous electrolyte solution may comprise other solvents in addition to the above-mentioned carbonates, as long as the effects of the present invention are not impaired. As such other solvents, a solvent having a high dielectric constant, high solubility of the electrolyte salt, a boiling point of 60 °C. or higher, and/or a wide electrochemical stability range is preferably used. More preferably, an organic solvent (non-aqueous solvent) having a low water content is used. Examples of such organic solvents include ethers such as ethylene glycol dimethyl ether (1,2-dimethoxyethane), ethylene glycol diethyl ether, tetrahydrofuran, 2-methyltetrahydrofuran, 2,6-dimethyltetrahydrofuran, tetrahydropyran, crown ether, triethylene glycol dimethyl ether, tetraethylene glycol dimethyl ether, 1,4-dioxane and 1,3-dioxolane; chain carbonate esters such as dimethyl carbonate, ethyl methyl carbonate (ethyl methyl carbonate), diethyl carbonate (diethyl carbonate), diphenyl carbonate and methyl phenyl carbonate; aliphatic carboxylate esters such as methyl formate, methyl acetate, methyl propionate, ethyl propionate, ethyl acetate, propyl acetate, butyl acetate and amyl acetate; aromatic carboxylate esters such as methyl benzoate and ethyl benzoate; lactones such as γ-butyrolactone, γ-valerolactone and δ-valerolactone; phosphate esters such as trimethyl phosphate, ethyl dimethyl phosphate, diethyl methyl phosphate and triethyl phosphate; nitriles such as acetonitrile, propionitrile, methoxypropionitrile, glutaronitrile, adiponitrile, 2-methylglutaronitrile, valeronitrile, butyronitrile and isobutyronitrile; amides such as N-methylformamide, N-ethylformamide, N,N-dimethylformamide, N,N-dimethylacetamide, N-methylpyrrolidinone and N-vinylpyrrolidone; sulfur compounds such as dimethylsulfone, ethylmethylsulfone, diethylsulfone, sulfolane, 3-methylsulfolane, 2,4-dimethylsulfolane; alcohols such as ethylene glycol, propylene glycol, ethylene glycol monomethyl ether, ethylene glycol and monoethyl ether; sulfoxides such as dimethyl sulfoxide, methyl ethyl sulfoxide and diethyl sulfoxide; aromatic nitriles such as benzonitrile and tolunitrile; and nitromethane, 1,3-dimethyl-2-imidazolidinone, 1,3-dimethyl-3,4,5,6-tetrahydro-2(1H)-pyrimidinone, 3-methyl-2-oxazolidinone, and the like. The other solvents may be used alone or in combination of two or more.

Among the above-mentioned other solvents, chain carbonates, aliphatic carboxylates, lactones and ethers are preferably used, and dimethyl carbonate, ethyl methyl carbonate, diethyl carbonate, γ-butyrolactone and γ-valerolactone are more preferably used.

The content of the other solvent in the non-aqueous electrolyte solution is not particularly limited as long as the effects of the present invention are achieved, and with respect to 100% by volume of the total of the above-mentioned carbonate and the other solvent, the upper limit is preferably 99% by volume, more preferably 95% by volume, and even more preferably 90% by volume, and the lower limit is preferably 50% by volume, more preferably 55% by volume, and even more preferably 60% by volume.

The non-aqueous electrolyte solution may comprise various additives to improve various characteristics of the secondary battery of the present invention, as long as the effects of the present invention are not impaired. Examples of such additives include carboxylic acid anhydrides such as succinic anhydride, glutaric anhydride, maleic anhydride, citraconic anhydride, glutaconic anhydride, itaconic anhydride, diglycolic anhydride, cyclohexanedicarboxylic anhydride, cyclopentanetetracarboxylic dianhydride and phenylsuccinic anhydride; sulfur-containing compounds such as ethylene sulfite, 1,3-propane sultone, 1,4-butane sultone, methyl methanesulfonate, busulfan, sulfolane, sulfolene, dimethyl sulfone and tetramethylthiuram monosulfide; nitrogen-containing compounds such as 1-methyl-2-pyrrolidinone, 1-methyl-2-piperidone, 3-methyl-2-oxazolidinone, 1,3-dimethyl-2-imidazolidinone and N-methylsuccinimide; phosphates such as monofluorophosphates and difluorophosphates; saturated hydrocarbon compounds such as heptane, octane and cycloheptane; and unsaturated hydrocarbon compounds such as biphenyl, alkylbiphenyls, terphenyls, partially hydrogenated terphenyls, cyclohexylbenzene, t-butylbenzene, t-amylbenzene, diphenyl ether and dibenzofuran.

The content of the additive in the non-aqueous electrolyte solution is not particularly limited as long as the effect of the present invention is achieved, and the upper limit is preferably 20% by mass, more preferably 15% by mass, even more preferably 10% by mass, even more preferably 8% by mass, and particularly preferably 5% by mass, and the lower limit is preferably 0.1% by mass, more preferably 0.2% by mass. If the content of the additive in the non-aqueous electrolyte solution is too small, it may be difficult to obtain the effect provided by the additive. On the other hand, if the content of the additive is too large, it is difficult to obtain the effect corresponding to the content, and in addition, the decomposition of the excess additive, the adsorption of the additive to the electrode or separator, other reactions such as polymerization of the additive may occur, which may adversely affect the battery performance.

The secondary battery of the present invention comprises the above-mentioned non-aqueous electrolyte solution as an electrolyte solution in the electrode body. The electrolyte solution in the electrode body is an electrolyte solution impregnated (absorbed and held) in the electrode body. Furthermore, the secondary battery of the present invention may comprise the above-mentioned non-aqueous electrolyte solution as a surplus electrolyte solution. The surplus electrolyte solution is an electrolyte solution that can flow through the electrode body and presents in an area other than the electrode body (i.e., is not impregnated in the electrode body). For example, when the secondary battery of the present invention comprises a battery case, the surplus electrolyte solution may be comprised between the inner wall of the battery case and the electrode body.

<Positive electrode>

The positive electrode comprises a positive electrode active material, and the positive electrode active material is supported on a positive electrode current collector. The positive electrode may further comprise a conductive assistant, a binder, and the like. The conductive assistant and/or the binder may be mixed with the positive electrode active material to be present as a positive electrode mixture, or may be present as a layer (undercoat layer) present between the positive electrode current collector and the positive electrode active material, or may be present as both of these. The shape of the positive electrode is not particularly limited as long as the effect of the present invention is achieved, but is usually a sheet shape.

The method for producing the positive electrode is not particularly limited as long as the effect of the present invention is achieved, but includes, for example, a method in which a positive electrode active material composition in which a positive electrode active material or a positive electrode mixture is dissolved or dispersed in a dispersion solvent is applied to a positive electrode current collector by a doctor blade method or the like, or the positive electrode current collector is immersed in the positive electrode active material composition, and then dried; a method in which a sheet obtained by kneading and molding a positive electrode active material composition is joined to a positive electrode current collector directly or via an undercoat layer, and then pressed and dried; a method in which a positive electrode active material composition to which a liquid lubricant has been added is applied or cast onto a positive electrode current collector to form into a desired shape, thereafter the liquid lubricant is removed, and then stretched in a uniaxial or multiaxial direction, and the like.

The material of the positive electrode current collector composed of the positive electrode is not particularly limited as long as the effect of the present invention is achieved, and any conventionally known material used for the positive electrode current collector of a non-aqueous electrolyte secondary battery can be used. Metals that are electrochemically stable at the positive electrode potential, for example, conductive metals such as aluminum, aluminum alloys and titanium, are used. Aluminum is preferably used as the material for the positive electrode current collector because it is easy to process into a thin film and is inexpensive.

The positive electrode active material composing the positive electrode may be any material capable of absorbing and releasing lithium ions, and any conventionally known positive electrode active material used in non-aqueous electrolyte secondary batteries may be used. In one embodiment, when the negative electrode is graphite, a suitable combination of positive electrode active materials is preferably used so that the terminal voltage of the battery during charging is 4.0 V or less. Examples of such positive electrode active material include lithium cobalt oxide, lithium nickel oxide, lithium manganate, $LiMn_2O_4$ based material with some of the elements substituted with Ni, $LiNi_{0.5}Mn_{1.5}O_4$, transition metal oxides such as ternary oxides represented by $LiNi_{1-xy}Co_xMn_yO_2$ and $LiNi_{1-x-y}Co_xAl_yO_2$ (wherein, in each formula, $0<x<1$, $0<y<1$, and $0<x+y<1$), and solid solution materials incorporating multiple transition metals (solid solution of electrochemically inactive layered $Li_2MnO_3$ and electrochemically active layered LiM'O [M' = transition metal such as Co and Ni]). In the present invention, a compound having an olivine structure represented by $LiFe_yM_{(1-y)}PO_4$ (wherein y is 0 or 1, and M is Co, Ni, Mn, Al, Ti or Zr) is mainly used. For example, when $LiFe_yM_{(1-y)}PO_4$ is mainly comprised, that is, when it is comprised at 50 mass % or more, the compound may be mixed with a transition metal oxide such as a ternary oxide, and in that case, two or more of positive electrode active materials may be used in combination.

In one embodiment, the positive electrode active material mainly comprises the compound having an olivine structure represented by $LiFe_yM_{(1-y)}PO_4$ (wherein y is 0 or 1, and M is Co, Ni, Mn, Al, Ti or Zr). In another embodiment, the positive electrode active material mainly comprises a compound represented by $LiFePO_4$. By making the positive electrode active material mainly comprise the compound having the olivine structure as mentioned above, the terminal voltage of the battery during charging can be made 4.0 V or less, and corrosion of the positive electrode current collector by the imide salt can be suppressed.

The content of the positive electrode active material in the positive electrode is preferably 75 to 99 parts by mass, and more preferably 85 to 97 parts by mass with respect to 100 parts by mass of the total amount of the positive electrode mixture and the undercoat layer.

The conductive assistant optionally comprised in the positive electrode mixture or the undercoat layer is used to improve the output of the non-aqueous electrolyte secondary battery. As the conductive assistant, a conductive carbon material is mainly used. Examples of the conductive carbon material include acetylene black, carbon black, graphite, fullerene, graphene, metal powder material, single-layered carbon nanotube, multi-layered carbon nanotube, vapor-grown carbon fiber, and the like.

When the positive electrode mixture or the undercoat layer comprises the conductive assistant, the content of the conductive assistant in the positive electrode mixture or the undercoat layer is preferably 0.1 to 10 mass%, more preferably 0.5 to 10 mass%, and even more preferably 0.5 to 5 mass% with respect to the total mass, 100 mass%, of the positive electrode mixture and the undercoat layer. If the content of the conductive assistant in the positive electrode mixture or the undercoat layer is too small, the conductivity of the positive electrode may be extremely poor, and the load characteristics and discharge capacity may be decreased. On the other hand, if the content of the conductive assistant is too large, the bulk density of the positive electrode mixture layer becomes high, and it is necessary to increase the content of the binder, which may result in an increase in internal resistance and adversely affect the battery characteristics.

The binder optionally comprised in the positive electrode mixture or undercoat layer is used to improve the adhesion between the materials composing the positive electrode mixture or undercoat layer and the adhesion between the positive electrode mixture and the positive electrode current collector. Examples of the binder include fluorine-based resins such as polyvinylidene fluoride and polytetrafluoroethylene; synthetic rubbers such as styrene-butadiene rubber, nitrile butadiene rubber, methyl methacrylate butadiene rubber and chloroprene rubber; polyamide-based resins such as polyamideimide; polyolefin-based resins such as polyethylene and polypropylene; poly(meth)acrylic resins such as polyacrylamide and polymethyl methacrylate; polyacrylic acid; cellulose-based resins such as methyl cellulose, ethyl cellulose, triethyl cellulose, carboxymethyl cellulose and aminoethyl cellulose; and vinyl alcohol -based resins such as ethylene vinyl alcohol and polyvinyl alcohol. The binder may be used alone or in combination of two or more. In addition, during the production of the positive electrode, the binder may be dissolved in a solvent or dispersed in a solvent.

When the positive electrode mixture or the undercoat layer comprises the binder, the content of the binder in the positive electrode mixture or the undercoat layer is preferably 0.1 to 10 mass%, more preferably 0.5 to 10 mass%, and even more preferably 0.5 to 5 mass% with respect to the total mass, 100 mass%, of the positive electrode mixture and the undercoat layer. If the content of the binder in the positive electrode mixture or the undercoat layer is too small, good adhesion cannot be obtained, and the positive electrode active material or the conductive assistant may be detached from the positive electrode current collector. On the other hand, if the content of the binder is too large, the internal resistance may increase, which may adversely affect the battery characteristics.

The content of the conductive assistant and/or the binder in the positive electrode mixture or the undercoat layer can be appropriately adjusted taking into consideration the intended use of the secondary battery of the present invention (emphasis on output, emphasis on energy, and the like), ion conductivity, and the like.

In the case of producing a positive electrode, examples of the solvent used in the positive electrode active material composition include alcohols, glycols, cellosolves, amino alcohols, amines, ketones, carboxylic acid amides, phosphoric acid amides, sulfoxides, carboxylic acid esters, phosphoric acid esters, ethers, nitriles, water, and the like. More specifically, examples of the solvent include ethanol, N-methylpyrrolidone, acetone, methyl ethyl ketone, dimethylformamide, diethylformamide, dimethylacetamide, diethylacetamide, hexamethylphosphoric acid triamide, dimethylsulfoxide, ethyl acetate, tetrahydrofuran, and the like. The solvent may be used alone or in combination of two or more. The content of the solvent in the positive electrode active material composition is not particularly limited as long as the effects of the present invention are achieved, and can be appropriately determined depending on the method for producing the positive electrode, the materials used, and the like.

In one embodiment, the positive electrode has an undercoat layer between the positive electrode collector and the positive electrode active material. The material composing the undercoat layer is not particularly limited as long as the effect of the present invention is achieved, but preferably comprises a binder, more preferably a binder and a conductive assistant, even more preferably a binder and a conductive material, and particularly preferably a binder and a conductive carbon material. The undercoat layer comprises the binder, thereby the adhesion between the positive electrode collector and the positive electrode active material is improved, and when the positive electrode collector and the positive electrode active material are pressed to be in close contact with each other, the binder functions as a buffer to suppress cracking of the positive electrode active material.

As the conductive material composing the undercoat layer, a carbon material having conductivity (conductive carbon material) is preferably used. Examples of the conductive carbon material include acetylene black, carbon black, graphite, fullerene, metal powder material, single-layered carbon nanotube, multi-layered carbon nanotube, vapor-grown carbon fiber, and the like. These materials may be used alone or in combination of two or more.

The average particle size of the conductive material comprised in the undercoat layer is preferably 5 $\mu$m or less, more preferably 1 to 4 $\mu$m, so that the conductive material disperses between the particles comprised in the undercoat layer and functions as a conductive material. The primary particle size of the conductive material is preferably 0.5 $\mu$m or less, more preferably 0.1 to 0.4 $\mu$m. The content of the conductive material comprised in the undercoat layer is preferably 5 mass % or more, more preferably about 5 to 20 mass %, so that the slurry is easy to handle and the capacity density of the positive electrode is increased.

In order to achieve both the physical properties (electrolyte solution permeability and peel strength) of the undercoat layer and the battery performance, the undercoat layer preferably comprises the binder in addition to the conductive material. Examples of the binder include fluorine-based resins such as polyvinylidene fluoride and polytetrafluoroethylene; synthetic rubbers such as styrene-butadiene rubber, nitrile butadiene rubber, methyl methacrylate butadiene rubber and chloroprene rubber; polyamide-based resins such as polyamideimide; polyolefin-based resins such as polyethylene and polypropylene; poly(meth)acrylic resins such as polyacrylamide and polymethyl methacrylate; polyacrylic acid; cellulose-based resins such as methyl cellulose, ethyl cellulose, triethyl cellulose, carboxymethyl cellulose and aminoethyl cellulose; and vinyl alcohol-based resins such as ethylene vinyl alcohol and polyvinyl alcohol. The binder may be used alone or in combination of two or more. In addition, during the production of the undercoat layer, the binder may be dissolved in a solvent or dispersed in a solvent.

When the undercoat layer contains the binder, the content of the binder in the undercoat layer is preferably 0.1 to 10 mass%, more preferably 0.5 to 10 mass%, and even more preferably 1 to 10 mass% with respect to 100 mass% of the undercoat layer. If the content of the binder in the undercoat layer is too small, good adhesion cannot be obtained, and the positive electrode mixture layer may be detached from the positive electrode current collector. On the other hand, if the content of the binder is too large, the internal resistance may increase, which may adversely affect the battery characteristics.

The content of the conductive material and/or the binder in the undercoat layer can be appropriately adjusted taking into consideration the intended use of the secondary battery of the present invention (emphasis on output, emphasis on energy, and the like), ion conductivity, and the like.

The undercoat layer may comprise other suitable components in addition to the above-mentioned components. For example, when the undercoat layer is formed from a composite slurry, the undercoat layer may comprise various blended components derived from the composite slurry. Examples of such blended component derived from the composite slurry include thickeners, as well as other additives such as surfactants, dispersants, wetting agents, defoamers, and the like.

The undercoat layer can be produced by preparing a slurry comprising the above-mentioned conductive material and other components such as a binder as necessary, applying the slurry to the surface of the positive electrode current collector, and drying it. The solvent comprised in the slurry may be an organic solvent or an aqueous dispersion. If necessary, for example, in order to improve the coating property to the positive electrode current collector, a liquid medium compatible with water may be used. Examples of liquid media compatible with water include alcohols, glycols, cellosolves, amino alcohols, amines, ketones, carboxylic acid amides, phosphoric acid amides, sulfoxides, carboxylic acid esters, phosphoric acid esters, ethers, nitriles, and the like, and these may be used within the range compatible with water.

In the process of applying and drying the slurry on the surface of the positive electrode current collector, the application and drying method are not particularly limited. Examples of the application and drying method include slot die coating, slide coating, curtain coating, gravure coating. Examples of the drying method include drying with warm air, hot air, low humidity air, vacuum drying, and drying with (far) infrared rays. The drying time and drying temperature are not particularly limited, but the drying time is usually 1 minute to 30 minutes, and the drying temperature is usually 40 °C to 80 °C. The method for forming the exposed part of the current collector surface is not particularly limited, for example, the exposed part of the current collector can be formed, for example, by masking a part of current collector to be exposed in advance, and applying and drying the slurry, and then peeling off the masking.

The lower limit of the area density of the undercoat layer (mass per unit area) is preferably 5 $\mu$g/cm$^2$, and the upper limit is preferably 250 $\mu$g/cm$^2$, more preferably 10 to 200 $\mu$g/cm$^2$. The area density of the undercoat layer can be adjusted by the applying amount of the above-mentioned slurry, and the like.

The positive electrode mixture layer provided on the surface of the undercoat layer is composed of a positive electrode active material. The positive electrode active material may be any material capable of absorbing and releasing lithium ions, and may be any of the positive electrode active materials exemplified for the positive electrode as mentioned above.

The volume density and area density of the positive electrode mixture can be adjusted to any value by the applying conditions and pressing pressure during preparation. The volume density and area density of the positive electrode mixture can be measured by the following methods, respectively.

The volume density of the positive electrode mixture is calculated by punching out a positive electrode to a fixed area S [cm$^2$], measuring its mass $W_p$ [g] and thickness $t_p$ [cm], and punching out a current collector to a fixed area S [cm$^2$], measuring its mass $W_e$ [g] and thickness $t_e$ [cm], and then calculating the volume density of the positive electrode mixture based on the measured values using the following formula.

$$\text{Volume density of positive electrode mixture} = (W_p - W_e) / \{S \times (t_p - t_e)\}$$

The volume density of the positive electrode mixture is preferably 1.5 to 2.5 g/cm$^3$, and more preferably 1.7 to 2.3 g/cm$^3$. If the volume density of the positive electrode mixture is too low, the number of contact points between the positive electrode current collector and the positive electrode mixture is too small, which undesirably increases the contact resistance, and if the volume density of the positive electrode mixture is too high, the amount of electrolyte solution impregnated in the positive electrode mixture is too small, which undesirably increases the resistance.

The area density of the positive electrode mixture is calculated by the following formula based on the above-mentioned measured values.

$$\text{Area density of positive electrode mixture} = (W_p - W_e) / S$$

The area density of the positive electrode mixture is preferably 5 to 100 mg/cm$^2$, and more preferably 6 to 90 mg/cm$^2$. If the area density of the positive electrode mixture is too low, the mass ratio of the current collector in the total mass of the battery increases and the mass ratio of the active material decreases, which is undesirable as it reduces the energy density of the battery, and if the area density of the positive electrode mixture is too high, the thickness of the positive electrode mixture is too thick, which increases the path length for lithium ions to conduct through the electrolyte solution, which is undesirable as it increases the resistance.

The positive electrode is adjusted so that the ratio of the positive electrode capacity to the capacity of the negative electrode (negative electrode capacity) described later (negative electrode utilization rate) is less than 1, preferably 0.57 or more and less than 1, and more preferably 0.6 to 0.9. By adjusting the negative electrode utilization rate to the above-mentioned range, a high energy density can be achieved in addition to improving the decrease of the cycle characteristics of the secondary battery of the present invention.

<Negative Electrode>

The negative electrode comprises a negative electrode active material, and the negative electrode active material is supported on a negative electrode current collector. The negative electrode may further comprise a conductive assistant, a binder, and the like. The conductive assistant and/or the binder may be mixed with the negative electrode active material to be present as a negative electrode mixture, or may be present as a layer (undercoat layer) present between the negative electrode and the negative electrode active material, or may be present as both of these. The shape of the negative electrode is not particularly limited as long as the effect of the present invention is achieved, but is usually a sheet shape.

The method for producing the negative electrode is not particularly limited as long as the effect of the present invention is achieved, and can be, for example, the same method as the method for producing the positive electrode as mentioned above. In addition, the conductive assistant, binder and material dispersion solvent used in producing the negative electrode can be the same as those used in the positive electrode as mentioned above. In addition, the volume density and area density of the negative electrode mixture can be measured by the same method as the method for measuring the volume density and area density of the positive electrode mixture as mentioned above.

The volume density of the negative electrode mixture is preferably 1.1 to 1.8 g/cm$^3$, and more preferably 1.2 to 1.7 g/cm$^3$. If the volume density of the negative electrode mixture is too low, the number of contact points between the negative electrode current collector and the negative electrode mixture is too small, which undesirably increases the contact resistance, and if the volume density of the negative electrode mixture is too high, the amount of electrolyte solution impregnated in the negative electrode mixture is too small, which undesirably increases the resistance.

The area density of the negative electrode mixture is preferably 3 to 50 mg/cm$^2$, and more preferably 4 to 40 mg/cm$^2$. If the area density of the negative electrode mixture is too low, the mass ratio of the current collector in the total mass of the battery increases and the mass ratio of the active material decreases, which is undesirable as it reduces the energy density of the battery, and if the area density of the negative electrode mixture is too high, the thickness of the negative electrode mixture is too thick, which increases the path length for lithium ions to conduct through the electrolyte solution, which is undesirable as it increases the resistance.

The material of the negative electrode current collector composing the negative electrode is not particularly limited as long as the effect of the present invention is achieved, and any conventionally known material used for the negative electrode current collector of a non-aqueous electrolyte secondary battery can be used. Preferably, a metal that does not form an alloy with lithium at the negative electrode potential, for example, a conductive metal such as copper, iron, nickel, silver, stainless steel (SUS), and the like is used. Copper is preferably used as the material of the negative electrode current collector because it is easy to process into a thin film.

The negative electrode active material composing the negative electrode may be any material capable of absorbing and releasing lithium ions, and any conventionally known negative electrode active material used in non-aqueous electrolyte secondary batteries may be used. Examples of such negative electrode active material include graphite materials such as artificial graphite and natural graphite, mesophase sintered bodies produced from coal and petroleum pitch, carbon materials such as non-graphitizable carbon, Si-based negative electrode materials such as Si, Si alloys and SiO, Sn-based negative electrode materials such as Sn alloys, lithium metal, and lithium alloys such as lithium-aluminum alloys. The negative electrode active materials may be used alone or in combination of two or more.

The content of the negative electrode active material in the negative electrode is preferably 80 to 99 parts by mass, and more preferably 90 to 99 parts by mass with respect to 100 parts by mass of the total amount of the negative electrode mixture and the undercoat layer.

<Separator>

The secondary battery of the present invention may further comprise a separator arranged to separate the positive electrode and the negative electrode in addition to the non-aqueous electrolyte solution, the positive electrode and the negative electrode. In one embodiment, the secondary battery of the present invention comprises a separator between the positive electrode and the negative electrode as mentioned above, and at least a part of the non-aqueous electrolyte solution as mentioned above is impregnated into the separator. In the secondary battery of the present invention, the separator is not particularly limited as long as the effects of the present invention are achieved, and any conventionally known separator can be used. Examples of the separator include a porous sheet made of a polymer that absorbs and holds the non-aqueous electrolyte solution as mentioned above (e.g., a polyolefin-based microporous separator or a cellulose-based separator, and the like), a non-woven fabric separator, a porous metal body, and the like. A polyolefin-based microporous separator is preferably used as the separator since it has a chemically stable property against an organic solvent. The separator may be used alone or in combination of two or more depending on, for example, the required mechanical strength.

Examples of material for the polyolefin-based microporous separator include polyethylene, polypropylene, and the like. An example of a combination of two or more polyolefin-based microporous separators includes a laminate having a three-layer structure of polypropylene/polyethylene/polypropylene.

Examples of material for the non-woven fabric separator include cotton, rayon, acetate, nylon, polyester, polypropylene, polyethylene, polyimide, aramid, glass, and the like.

The secondary battery of the present invention may further comprise a battery exterior material that houses the secondary battery in order to protect it from external impacts during use, environmental decrease, and the like. Any material for the battery exterior material may be used as long as it is conventionally known as a battery exterior material for non-aqueous electrolyte secondary batteries.

A preferred embodiment of the non-aqueous electrolyte secondary battery of the present invention will be described with reference to the drawings. FIG. 1 is a schematic cross-sectional view showing one embodiment of the non-aqueous electrolyte secondary battery of the present invention. The non-aqueous electrolyte secondary battery 1 according to the present invention is a laminate in which one plate-shaped positive electrode 10, two plate-shaped negative electrodes 20, and two porous separators 30 are laminated in the order of negative electrode/porous separator/positive electrode/porous separator/negative electrode, which is housed in an exterior casing 40 and sealed in a state in which a non-aqueous electrolyte (not shown) is filled in the exterior casing 40. In this embodiment, the positive electrode 10, the negative electrode 20, and the porous separator 30 are all rectangular in plan view. The short side direction, long side direction, and thickness direction of the positive electrode 10, the negative electrode 20, and the separator 30 composing the non-aqueous electrolyte secondary battery 1 are assumed to coincide with the short side direction X, the long side direction Y, and the thickness direction Z of the non-aqueous electrolyte secondary battery 1, respectively.

FIG. 2 is a schematic cross-sectional view showing one embodiment of the positive electrode 10 of the non-aqueous electrolyte secondary battery 1, and FIG. 3 is a schematic plan view showing one embodiment of the positive electrode 10. As shown in FIG. 2, the positive electrode 10 is composed of a current collector 11, an undercoat layer 12 covering one surface of the current collector 11, and a positive electrode mixture layer 13 provided on the undercoat layer 12. Similarly, the other surface of the current collector 11 is also provided with an undercoat layer 12 covering one surface of the current collector 11, and a positive electrode mixture layer 13 provided on the undercoat layer 12. Although not shown, when the positive electrode 10 and the negative electrode 20 are paired, the positive electrode mixture layer 13 may be provided on at least one surface of the positive electrode current collector 11 on the opposing negative electrode 20 side.

In the non-aqueous electrolyte secondary battery 1 of the present invention, as shown in FIG. 3, the positive electrode 10 has a part 11A where the surface of the positive electrode collector 11 is exposed, and a part 12A where the surface of the undercoat layer 12 is exposed. It has been known that by providing the undercoat layer between the positive electrode collector and the positive electrode mixture layer, the adhesion between them is improved, and the positive electrode mixture layer is prevented from peeling off from the positive electrode collector in a high-temperature environment. However, by providing a part where the surface of the undercoat layer is exposed, the Al surface is not exposed on the positive electrode side facing the negative electrode. Furthermore, since there is no part between the positive electrode mixture and the current collector foil with which the aluminum foil directly contacts even partially, even if the battery is placed in a high-temperature environment, the increase in battery resistance is less uneven, and the decrease of cycle characteristics can be suppressed.

The width W2 of the exposed part 12A of the undercoat layer 12 is preferably 0.1 to 10 mm, and more preferably 0.2 to 5 mm. By adjusting the width W2 to the range of 0.2 to 5 mm, the decrease of cycle characteristics can be further suppressed even when the battery is subjected to a high-temperature thermal history of, for example, 75 °C.

In addition, the exposed part 11A of the positive electrode current collector where no undercoat layer is present is provided at an edge part at one end of the positive electrode current collector 11. A lead wire (not shown) is provided at any location of this exposed part 11A. There is no particular limitation on the width 1 of the exposed part 11A of the positive electrode current collector as long as it is a width that allows good connection with the lead wire, and it can be appropriately adjusted depending on the shape of the secondary battery of the present invention, and the like.

[Battery module and battery system]

According to another aspect of the present invention, there is provided a battery module and a battery system comprising the above-mentioned secondary battery of the present invention (hereinafter also referred to as "the battery module and battery system of the present invention").

The number of secondary batteries of the present invention in the battery module and battery system of the present invention can be appropriately adjusted according to the voltage required. For example, when the secondary battery of the present invention is used as a high-voltage power source (several tens of volts to several hundreds of volts) to be mounted on an electric vehicle, a hybrid electric vehicle, and the like, it can be made into a battery module or battery system by connecting a plurality of batteries in series.

[Examples]

The present invention will be described in more detail below with reference to examples, but the present invention is not limited to these examples.

Preparation Example A: Preparation of non-aqueous electrolyte solution

A non-aqueous electrolyte solution was prepared by adding 0.5 mass% of vinylene carbonate to a non-aqueous solvent in which ethylene carbonate and ethyl methyl carbonate were mixed in amounts of 20 volume% and 80 volume%, respectively, and further adding and dissolving lithium hexafluorophosphate ($LiPF_6$) and lithium bis(fluorosulfonyl)imide (LiFSI).

Preparation Example B: Preparation of positive electrode

A positive electrode active material (lithium iron phosphate, LFP), a conductive assistant (acetylene black), and a binder (polyvinylidene fluoride (PVDF)) were mixed in amounts of 96 mass%, 2 mass%, and 2 mass%, respectively, and dispersed in a solvent (N-methyl-2-pyrrolidone (NMP)) to obtain a positive electrode mixture slurry. The obtained positive electrode mixture slurry was then applied onto a carbon-coated positive electrode current collector and dried to prepare a positive electrode (positive electrode sheet).

Preparation Example C: Preparation of negative electrode

A negative electrode active material (graphite), a binder (styrene butadiene rubber (SBR)), and a dispersant (carboxymethyl cellulose (CMC)) were mixed in amounts of 98 mass%, 1 mass%, and 1 mass%, respectively, and dispersed in an aqueous solvent to obtain a negative electrode mixture slurry. The obtained negative electrode mixture slurry was then applied onto both sides of a negative electrode current collector (electrolytic copper foil) and dried. The electrode was then pressed to prepare a negative electrode (negative electrode sheet).

Example 1: Preparation of a non-aqueous electrolyte secondary battery

A non-aqueous electrolyte secondary battery was prepared according to the following procedure.

First, a laminate was obtained by stacking the positive electrode sheet obtained in Preparation Example B and the negative electrode sheet obtained in Preparation Example C such that a separator was placed between the negative electrode and the positive electrode. Next, the laminate was housed in a laminate exterior material, and the non-aqueous electrolyte solution obtained in Preparation Example A was added to the laminate exterior material and the opening was sealed to prepare a non-aqueous electrolyte secondary battery.

The battery capacity, nominal voltage, negative electrode utilization rate, energy density and surplus electrolyte solution amount of each of the non-aqueous electrolyte secondary batteries of the Examples and Comparative Examples are shown in Table 1. The negative electrode utilization rate was calculated by the following formula assuming that the capacity of the negative electrode active material was 350 mAh/g and the capacity of the positive electrode active material was 155 mAh/g. Negative electrode utilization rate (%) = (Area density of positive electrode mixture × 155) / (Area density of negative electrode mixture × 350)

In addition, for the non-aqueous electrolyte of each of the non-aqueous electrolyte secondary batteries of the Examples and Comparative Examples, the total content of $LiPF_6$ and lithium imide salt per unit battery capacity, the ratio of the molecular number of the lithium imide salt to the total molecular number of the Li salt, the content of ethylene carbonate (EC) in the non-aqueous solvent, and the value calculated from the following formula (1) (hereinafter also referred to as "the value of formula (1)) are shown in Table 1:

$$16.5 \times \text{Ratio of the positive electrode capacity to the negative electrode capacity} - 9.2.$$

The content of lithium imide salt in each non-aqueous electrolyte secondary battery was determined according to the following procedure. First, one end of the laminate of each non-aqueous electrolyte secondary battery was opened, and the surplus electrolyte solution was taken out by the above-mentioned method. That is, the surface with the largest area of the battery was placed on a flat desk, a flat plate with an area equal to or larger than the area of the battery was placed on the flat plate, and a weight of 10 kg or more was placed on the flat plate, and the battery was left to stand for 10 minutes or more. Then, one end of the exterior was cut off to make an opening, and the electrolyte solution that came out was transferred to a resin container, the mass was measured, and this was recorded as the amount of surplus electrolyte solution. For the surplus electrolyte solution taken out, the FSI ion and $PF_6$ ion were quantified by ion chromatography to determine the ratio of the moles of lithium imide salt to the total moles of Li salt. That is, for FSI ions and $PF_6$ ions, calibration curves were drawn in advance using LiFSI salt and $LiPF_6$ salt, respectively, and then the molecular numbers of FSI ions and $PF_6$ ions in the solution were quantified using a surplus electrolyte solution as a sample, and the ratio of the molecular number of lithium imide salt to the total molecular number of Li salt was calculated using the following formula. Ratio of the molecular number of lithium imide salt to the total molecular number of Li salt [mol%] = the molecular number of FSI ion [mol] / (the molecular number of FSI ion [mol] + the molecular number of $PF_6$ ion [mol])

Next, the battery components excluding the exterior material, i.e., the positive electrode, the negative electrode, and the separator, were dried, and dimethyl carbonate was prepared in an amount 1 to 3 times of the mass of the battery, and the dried product was immersed in it for one week. A surplus electrolyte solution was added to the obtained solution, and the total mass $W_e$ was recorded. Furthermore, the Li salt concentration in this combined solution was determined by ICP emission spectrometry. That is, a calibration curve was drawn for Li concentration with LiFSI in advance, and the Li concentration was determined by analyzing the surplus electrolyte solution. Based on the measured value, the amount of lithium imide salt was calculated by the following formula.

Amount of lithium imide salt [mol] = Li ion concentration [mol/kg] × $W_e$ [kg] × the ratio of the molecular number of lithium imide salt to the total molecular number of Li salt [mol%]

The content of $LiPF_6$ in each non-aqueous electrolyte secondary battery was calculated by the following formula.

Amount of $LiPF_6$ salt [mol] = Li ion concentration [mol/kg] × $W_e$ [kg] × (100 - the ratio of the molecular number of lithium imide salt to the total molecular number of Li salt) [mol%]

The total content of $LiPF_6$ and the lithium imide salt was calculated by the following formula.

Total content of $LiPF_6$ and lithium imide salt [mol] = Li ion concentration [mol / kg] × $W_e$ [kg]

The content of ethylene carbonate (EC) in the non-aqueous solvent was calculated by gas chromatography using the surplus electrolyte solution as a sample. Also in this case, calibration curves for ethylene carbonate and other solvents were prepared in advance, and the volume ratio of the solvents was determined by gas chromatography using the surplus electrolyte solution as a sample.

Table 1

| | Battery capacity (Ah) | Nominal voltage (V) | Total content of LiPF$_6$ and lithium imide salt (mmol/Ah) | Value of formula (1) (mmol/Ah) | Ratio of the molecular number of lithium imide salt to the total molecular number of Li salt (mol%) | EC/solvent ratio (vol%) | Amount of surplus electrolyte solution (g) | Negative electrode utilization rate (%) | Energy density (Wh/kg) | 2C cycle retention rate @3000 cycles (%) | Judge |
|---|---|---|---|---|---|---|---|---|---|---|---|
| Example 1 | 20 | 3.2 | 3.3 | 2.4 | 33 | 20 | 22.9 | 70 | 139 | 88 | A |
| Example 2 | 20 | 3.2 | 3.3 | 0.7 | 33 | 20 | 22.9 | 60 | 135 | 87 | A |
| Example 3 | 20 | 3.2 | 4.2 | 4.0 | 33 | 20 | 22.9 | 80 | 142 | 86 | A |
| Example 4 | 20 | 3.2 | 5.8 | 5.7 | 33 | 20 | 22.9 | 90 | 145 | 82 | A |
| Example 5 | 20 | 3.2 | 3.3 | 2.4 | 5 | 20 | 22.9 | 70 | 139 | 82 | A |
| Example 6 | 20 | 3.2 | 3.3 | 2.4 | 20 | 20 | 22.9 | 70 | 139 | 86 | A |
| Example 7 | 20 | 3.2 | 3.3 | 2.4 | 45 | 20 | 22.9 | 70 | 139 | 87 | A |
| Example 8 | 20 | 3.2 | 3.3 | 2.4 | 33 | 10 | 22.9 | 70 | 139 | 80 | B |
| Example 9 | 20 | 3.2 | 3.3 | 2.4 | 33 | 50 | 22.9 | 70 | 139 | 84 | A |
| Example 10 | 15 | 3.2 | 3.9 | 2.4 | 33 | 20 | 17.1 | 70 | 139 | 88 | A |
| Example 11 | 5 | 3.2 | 3.9 | 2.4 | 33 | 20 | 5.71 | 70 | 139 | 88 | A |
| Example 12 | 3 | 3.2 | 3.9 | 2.4 | 33 | 20 | 3.43 | 70 | 139 | 88 | A |
| Example 13 | 1 | 3.2 | 3.9 | 2.4 | 33 | 20 | 1.14 | 70 | 139 | 88 | A |
| Example 14 | 35 | 3.2 | 3.9 | 2.4 | 33 | 20 | 40.0 | 70 | 139 | 88 | A |
| Example 15 | 50 | 3.2 | 3.9 | 2.4 | 33 | 20 | 57.1 | 70 | 139 | 88 | A |
| Example 16 | 100 | 3.2 | 3.9 | 2.4 | 33 | 20 | 114 | 70 | 139 | 88 | A |
| Example 17 | 20 | 3.2 | 2.5 | 2.4 | 33 | 20 | 22.9 | 70 | 139 | 82 | A |
| Example 18 | 20 | 3.2 | 3.9 | 2.4 | 33 | 20 | 0.0 | 70 | 146 | 80 | B |
| Example 19 | 20 | 3.2 | 6.1 | 2.4 | 33 | 20 | 57.9 | 70 | 129 | 84 | A |
| Example 20 | 20 | 3.2 | 4.9 | 0.4 | 33 | 20 | 22.9 | 58 | 134 | 80 | B |
| Comparative Example 1 | 20 | 3.2 | 2.2 | 2.4 | 33 | 20 | 22.9 | 70 | 139 | 78 | C |

(continued)

| | Battery capacity (Ah) | Nominal voltage (V) | Total content of $LiPF_6$ and lithium imide salt (mmol/Ah) | Value of formula (1) (mmol/Ah) | Ratio of the molecular number of lithium imide salt to the total molecular number of Li salt (mol%) | EC/solvent ratio (vol%) | Amount of surplus electrolyte solution (g) | Negative electrode utilization rate (%) | Energy density (Wh/kg) | 2C cycle retention rate @3000 cycles (%) | Judge |
|---|---|---|---|---|---|---|---|---|---|---|---|
| Comparative Example 2 | 20 | 3.2 | 5.2 | 5.7 | 33 | 20 | 22.9 | 90 | 145 | 79 | C |
| Comparative Example 3 | 20 | 3.2 | 5.8 | 5.7 | 0 | 20 | 22.9 | 90 | 145 | 77 | C |
| Comparative Example 4 | 20 | 3.2 | 7.5 | 7.3 | 33 | 20 | 22.9 | 100 | 147 | 73 | C |
| Comparative Example 5 | 20 | 3.7 | 3.3 | 2.4 | 33 | 20 | 22.9 | 70 | 161 | Electrical shorting | C |
| Comparative Example 6 | 20 | 3.2 | 3.9 | 4.0 | 33 | 20 | 22.9 | 80 | 142 | 78 | C |

Test Example 1: Cycle characteristic test

For each of the obtained non-aqueous electrolyte secondary batteries of Examples and Comparative Examples, a charge/discharge cycle was repeated by using a charge/discharge tester (manufactured by Toyo Systems Co., Ltd.) in a temperature environment of 25 °C. under predetermined charge conditions (2C, end voltage 3.6V, constant current mode) and discharge conditions (2C, end voltage 2V, constant current mode). The cycle characteristic test is performed with providing a 1-minute charge/discharge rest time during each charge/discharge. At the first and 3000th cycles, the cycle retention rate was determined by performing a capacity test under predetermined charge conditions (0.2C, end voltage 3.6V, constant current/constant voltage mode 0.05C cut) and discharge conditions (0.2C, end voltage 2V, constant current mode). The energy density was calculated by the following formula based on the discharge capacity [Ah], nominal voltage [V], and battery mass [kg] at the first cycle.

Energy density [Wh/kg] = Discharge capacity [Ah] $\times$ Nominal voltage [V] / Battery mass [kg]

Based on the discharge capacity after 1 cycle and the discharge capacity after 3000 cycles, the cycle retention rate was calculated based on the following formula. The results are shown in Table 1.

Cycle retention rate (%) = (Discharge capacity after 3000 cycles / Discharge capacity after 1 cycle) $\times$ 100

From the results shown in Table 1, it was shown that the non-aqueous electrolyte secondary batteries of each Example, which is a lithium ion secondary battery, which comprises a positive electrode comprising a positive electrode active material, a negative electrode, and a non-aqueous electrolyte solution, wherein the non-aqueous electrolyte solution comprises $LiPF_6$ and a lithium imide salt as an electrolyte, and a carbonate-based solvent as a solvent, the lithium ion secondary battery comprises or does not comprise a surplus electrolyte solution, the ratio of the positive electrode capacity to the negative electrode capacity is less than 1, the nominal voltage is less than 3.6 V, and the total content of $LiPF_6$ and lithium imide salt comprised in the non-aqueous electrolyte solution per unit battery capacity and the ratio of the positive electrode capacity to the negative electrode capacity satisfies the following formula:

Total content of $LiPF_6$ and lithium imide salt per unit battery capacity $\geqq$ 16.5 $\times$ Ratio of the positive electrode capacity to the negative electrode capacity - 9.2, can provide an excellent cycle retention rate of 80% or more. In particular, the non-aqueous electrolyte secondary batteries of Examples 1 to 17, which comprises a surplus electrolyte solution, has the ratio of the amount of the surplus electrolyte solution per unit battery capacity of 1 to 2.5, and had the ratio of the positive electrode capacity to the negative electrode capacity of 0.6 or more and less than 1, can provide an excellent energy density of 135 Wh/kg or more in addition to the excellent cycle retention rate as mentioned above.

**Claims**

1.  A lithium ion secondary battery, which comprises a positive electrode comprising a positive electrode active material, a negative electrode, and a non-aqueous electrolyte solution, wherein

    the non-aqueous electrolyte solution comprises $LiPF_6$ and a lithium imide salt as an electrolyte, and comprises a carbonate-based solvent as a solvent,
    the lithium ion second battery comprises or does not comprise a surplus electrolyte solution,
    the ratio of the positive electrode capacity to the negative electrode capacity is less than 1,
    the nominal voltage is less than 3.6 V, and
    the total content of $LiPF_6$ and lithium imide salt comprised in the non-aqueous electrolyte solution per unit battery capacity and the ratio of the positive electrode capacity to the negative electrode capacity satisfies the following formula:

    Total content of $LiPF_6$ and lithium imide salt per unit battery capacity $\geqq$ 16.5 $\times$ Ratio of the positive electrode capacity to the negative electrode capacity - 9.2

2. The lithium ion secondary battery according to claim 1, which comprises a surplus electrolyte solution.

3. The lithium ion secondary battery according to claim 1, wherein the ratio of the positive electrode capacity to the negative electrode capacity is 0.57 or more and less than 1.

4. The lithium ion secondary battery according to claim 1, wherein the ratio of the molecular number of the lithium imide salt to the total molecular number of the Li salt in the non-aqueous electrolyte solution is 5% or more and less than 50%.

5. The lithium ion secondary battery according to claim 1, wherein the lithium imide salt is represented by the following general formula:

$$LiN(SO_2R)_2$$

wherein R represents a fluorine atom or $C_xF_{(2x+1)}$, and x is an integer of 1 to 3.

6. The lithium ion secondary battery according to claim 1, wherein the lithium imide salt is lithium bis(fluorosulfonyl)imide.

7. The lithium ion secondary battery according to claim 1, wherein the content of ethylene carbonate in the solvent is 10 to 50% by volume.

8. The lithium ion secondary battery according to claim 1, wherein the battery capacity is 1 Ah or more.

9. The lithium ion secondary battery according to claim 1, wherein the positive electrode has a layer of aluminum foil and has an undercoat layer between the layer of aluminum foil and the positive electrode active material.

10. The lithium ion secondary battery according to claim 8, wherein the undercoat layer comprises a conductive carbon material.

11. The lithium ion secondary battery according to claim 1, wherein the positive electrode active material comprises a compound represented by the following general formula:

$$LiFe_yM_{(1-y)}PO_4$$

wherein y is 0 or 1, and M is Co, Ni, Mn, Al, Ti or Zr.

12. The lithium ion secondary battery according to claim 1, wherein the positive electrode active material is lithium iron phosphate.

13. A battery module or a battery system comprising one or more lithium ion secondary batteries according to any one of claims 1 to 12.

FIG. 1

FIG. 2

FIG. 3

## INTERNATIONAL SEARCH REPORT

| International application No. |
|---|
| **PCT/JP2023/035285** |

**A.    CLASSIFICATION OF SUBJECT MATTER**

*H01M 10/052*(2010.01)i; *H01M 4/136*(2010.01)i; *H01M 4/58*(2010.01)i; *H01M 4/66*(2006.01)i; *H01M 10/0568*(2010.01)i; *H01M 10/0569*(2010.01)i; *H01M 10/0585*(2010.01)i
FI:    H01M10/052; H01M10/0568; H01M10/0569; H01M4/66 A; H01M4/136; H01M4/58; H01M10/0585

According to International Patent Classification (IPC) or to both national classification and IPC

**B.    FIELDS SEARCHED**

Minimum documentation searched (classification system followed by classification symbols)

H01M10/052; H01M4/136; H01M4/58; H01M4/66; H01M10/0568; H01M10/0569; H01M10/0585

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2020/090678 A1 (GS YUASA INTERNATIONAL LTD.) 07 May 2020 (2020-05-07) | 1-13 |
| A | JP 2017-126542 A (NIPPON SHOKUBAI CO., LTD.) 20 July 2017 (2017-07-20) | 1-13 |
| A | WO 2016/143543 A1 (SEIKO INSTRUMENTS INC.) 15 September 2016 (2016-09-15) | 1-13 |

☐ Further documents are listed in the continuation of Box C.        ☑ See patent family annex.

\* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| **11 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/035285**

| Patent document cited in search report | | | Publication date (day/month/year) | Patent family member(s) | | | Publication date (day/month/year) |
|---|---|---|---|---|---|---|---|
| WO | 2020/090678 | A1 | 07 May 2020 | US | 2022/0006080 | A1 | |
| | | | | EP | 3863092 | A1 | |
| | | | | CN | 113228350 | A | |
| JP | 2017-126542 | A | 20 July 2017 | (Family: none) | | | |
| WO | 2016/143543 | A1 | 15 September 2016 | US | 2018/0019500 | A1 | |
| | | | | EP | 3270452 | A1 | |
| | | | | KR | 10-2017-0100005 | A | |
| | | | | CN | 107251304 | A | |

Form PCT/ISA/210 (patent family annex) (January 2015)

**EP 4 597 665 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011150958 A
- JP 2014126256 A